# EUROPÄISCHE PATENTSCHRIFT

(11) **EP 0 989 012 B1**
(45) Veröffentlichungstag und Bekanntmachung des Hinweises auf die Patenterteilung: **30.03.2011**
(21) Anmeldenummer: 99116813.9
(22) Anmeldetag: 01.09.1999
(51) Int. Cl.: B60W 30/14, B60W 30/18, G08G 1/16

(54) **Verfahren zur Geschwindigkeits- und/oder Abstandsregelung bei Kraftfahrzeugen**
Method for cruise control and/or regulation of vehicle spacing
Procédé de régulation de vitesse et/ou régulation de la distance entre deux véhicules

(30) Priorität: 22.09.1998 DE 19843395
(43) Veröffentlichungstag der Anmeldung: 29.03.2000
(73) Patentinhaber: Volkswagen Aktiengesellschaft, 38436 Wolfsburg (DE)
(72) Erfinder: Bastian, Andreas, Dr., 38114 Braunschweig (DE)

(56) Entgegenhaltungen:
- EP-A- 0 956 993
- DE-A- 3 308 803
- DE-A- 4 306 086
- DE-A- 4 337 163
- DE-A- 19 502 954
- DE-A- 19 711 819
- US-A- 5 454 442

## Beschreibung

Die Erfindung betrifft ein Verfahren zur Geschwindigkeits- und/oder Abstandsregelung bei Kraftfahrzeugen, bei welchem Geschwindigkeits- und/oder Beschleunigungs- und/oder Verzögerungssollwerten eine wählbare, einstellbare Längsdynamikcharakteristik überlagert wird, gemäß Oberbegriff des Patentanspruches 1.

Verfahren zur Geschwindigkeits- und/oder Abstandsregelung bei Kraftfahrzeugen sind in vielfältiger Form bekannt. Die reine Geschwindigkeitsregelung erfolgt über bekannte, sozusagen Tempomat-Verfahren. Eine dazu weiterentwickelte Variante ist die Kopplung der Geschwindigkeitsregelung mit einer Abstandsregelung. Auf diese Weise kann zunächst einmal bezogen auf eine eingestellte Sollgeschwindigkeit bzw. eine Solldurchschnittsgeschwindigkeit auch die aktuelle Verkehrssituation miteinbezogen werden. Abstandssensoren werden dabei derart verwendet, daß sie den Abstand zu vorausfahrenden Fahrzeugen ermitteln und in der Geschwindigkeitsregelung mitberücksichtigen, d. h. vorausfahrende langsamere Fahrzeuge bewirken dann eine automatische Drosselung der aktuellen Geschwindigkeit bzw. eine Verzögerung des Fahrzeuges entweder mit Motorbremse oder durch Hinzunahme der Betriebsbremse.

So sind aus den EP 0 813 986 A2, aus der EP 0 813 987 A2 und aus der EP 0 813 988 A2 verschiedene Verfahren zur Geschwindigkeits- und/oder Abstandsregelung bekannt. Die besagten Verfahren werden bekanntermaßen unter der Bezeichnung ADR-Verfahren benannt.

Aus den oben genannten Schriften sind daher ADR-Verfahren bekannt, welche zu den abgeforderten Wunsch- oder Sollgeschwindigkeiten und Sollbeschleunigungen, geschwindigkeits- oder abstandsbezogene Sollgeschwindigkeiten und -beschleunigungen ins Verhältnis setzt. Diese geschwindigkeitsbezogenen oder beschleunigungsbezogenen zusätzlichen Sollwerte können dabei durch Fahrereingriff oder anderweitig vollzogen werden. Sie stellen einen Eingriff auf den ansonsten automatischen Fahrablauf dar. Ein solcher Eingriff kann daher entweder semi-automatisch oder durch Wahlschalter bewußt zugeschaltet werden.

Diese an sich vorteilhaften Verfahren sind jedoch weiterhin verbesserungsfähig und ausbaubar, insbesondere im Hinblick auf die Erhöhung der Fahrsicherheit.

Aus der DE 44 37 678 A1 ist darüber hinaus eine Verfahrensweise bekannt, bei der mit Hilfe eines Wahlschalters mehr oder weniger sportlichere Fahrweisen durch entsprechende Beeinflussung der Regel- oder Stellgrößen durch Überlagerung generiert werden können. Dieses System ist jedoch im Hinblick auf vielfältig auftretende individuelle Fahrsituationen nicht anpassbar genug.

Aus der DE 43 06 086 A1 ist eine Motorsteuereinrichtung für die Steuerung eines Motors durch Ausgabe eines Motorausgangsleistung-Steuerwertes an eine Motorausgangsleistung-Steuereinrichtung bekannt, mit einer Gaspedalwinkelstellung-Erfassungseinrichtung für die Erfassung des Stellwertes eines Gaspedals, einer Fahrzeuggeschwindigkeit-Erfassungseinrichtung für die Erfassung der Fahrzeuggeschwindigkeit, einer Drehmomentprofil-Speichereinrichtung für die Speicherung von Soll-Antriebswellendrehmomentprofilen für mehrere Fahrzeugumgebungsbedingungen, wobei die Profile vom Gaspedalstellwert und von der Fahrzeuggeschwindigkeit abhängen, einer Fahrzeugumgebungsbedingung-Erkennungseinrichtung für die Erkennung verschiedener Fahrzeugumgebungsbedingungen, um aus den in der Drehmomentprofil-Speichereinrichtung gespeicherten mehreren Soll-Antriebswellendrehmomentprofilen ein Soll-Antriebswellendrehmomentprofil auszuwählen, einer Soll-Antriebswellendrehmoment-Berechnungseinrichtung für die Bestimmung eines Soll-Antriebswellendrehmoments aus dem ausgewählten Soll-Antriebswellendrehmomentprofil, dem erfassten Gaspedalstellwert und der erfassten Fahrzeuggeschwindigkeit, und einer Motorausgangsleistungs-Steuerwert-Berechnungseinrichtung für die Bestimmung eines Motorausgangsleistung-Steuerwertes, bei dem eine Fahrzeugantriebswelle das Soll-Antriebswellendrehmoment erzeugt, und für die Ausgabe der bestimmten Motorausgangsleistung-Steuereinrichtung an die Motorausgangsleistung-Steuereinrichtung.

Aus der DE 43 37 163 A1 ist eine Steuerungseinrichtung zur selbsttätigen Schaltung eines von einem Motor antreibbaren Automatikgetriebes bekannt, umfassend Sensoren zur Erfassung wenigstens einer Betriebszustandsgröße des Motors, Sensoren zur Erfassung des eingelegten Ganges, der Getriebeabtriebswellendrehzahl sowie für die Fahrzeugquerbeschleunigung, einen Computer zur Verarbeitung der von den Sensoren ermittelten Werte, einen mit dem Computer verbundenen Getriebesteuerungsrechner sowie mit diesem Getriebesteuerungsrechner verbundene elektrohydraulisch betätigbare Stellglieder zur Schaltung der Gangstufen des Getriebes, wobei der Computer mit Sensoren zur Erfassung von Informationen über individuelle Fahrstrecken verbunden ist und über einen ersten Speicher zum Abspeichern von während einer vom Fahrer start- und stoppbaren Lernphase ermittelten Sensordatenverläufe über die Fahrstrecke verfügt. Weiter weist der Computer einen zweiten Speicher auf, in dem Klassifizierungsmerkmale zum Erkennen bestimmter Fahrstrecken abspeicherbar sind, einen dritten Speicher auf, in dem nach dem Ende jeder neuen Lernphase die bezüglich einer bestimmten Fahrstrecke ermittelten Sensordatenverläufe mit der zugeordneten Fahrstreckenerkennung abspeicherbar sind, und einen vierten Speicher auf, in dem Rechenregeln abgelegt sind, mit deren Hilfe in einer Nichtlernsituation durch Vergleich der aktuell ermittelten Sensordaten mit den im dritten Speicher abgelegten Sensordatenverläufen die gerade vom Fahrer begonnene Fahrstrecke erkannt wird, und mit deren Hilfe in einem fünften Speicher abgelegte fahrstreckenrelevante Schaltempfehlungen für das Getriebe abrufbar und dem Getriebesteuerungsrechner zuleitbar sind, wobei der Computer in der Steuerungseinrichtung mit einem Fahrweginformationen ausgebenden Navigationssystem in Verbindung steht.

Aus der DE 197 11 819 A1 ist überdies ein Verfahren zur Geschwindigkeitsregelung eines Kraftfahrzeuges entsprechend den Merkmalen das Oberbegriffs des Anspruchs 1 bekannt, bei dem eine weitergehende Beeinflussung bzw. Überlagerung bzw. Mitberücksichtigung eines einstell- oder vorgebbaren Längsbeschleunigungssollwertes möglich ist. Dies betrifft im Wesentlichen die Anpassung an eine mehr oder weniger sportliche Fahrweise.

Auch dieses System bzw. ein solches Verfahren, welches an sich vorteilhaft eingesetzt wird, ist im Hinblick auf Fahrsicherheit weiterentwicklungsfähig.

Hiervon ausgehend liegt der Erfindung somit die Aufgabe zugrunde, die an sich beschriebene vorteilhafte Verfahrensweise dahingehend weiterzuentwickeln, dass die Fahrsicherheit auch bei fahrerindividueller Einstellung erhöht wird.

Mit dieser Aufgabenvorgabe ist gemeint, dass das System zum einen eine Anpassung an die aktuelle Verkehrssituation ermöglicht, und zum anderen aber berücksichtigt, dass jeder mögliche Fahrer ein anderes Fahrverhalten aufweist. Daher zielt die Aufgabe auf eine Erhöhung der Fahrsicherheit, auch unter dem Aspekt, dass in mehr oder weniger wiederkehrender Folge verschiedene Fahrer das Fahrzeug bedienen.

Die gestellte Aufgabe ist bei einem Verfahren der gattungsgemäßen Art erfindungsgemäß durch die kennzeichnenden Merkmale des Patentanspruches 1 gelöst.

Weitergehende Ausgestaltungen des erfindungsgemäßen Verfahrens sind in den abhängigen Ansprüchen 2-7 angegeben.

Der Kern der Erfindung besteht darin, dass zum einen aktuelle Fahrsituationen sensorisch erkannt werden und dass eine Mehrzahl charakteristischer Längsdynamikprofile für verschiedene, wiederkehrende Fahrer- bzw. Verkehrssituationen abgespeichert sind und bei gegebener Fahrsituation abrufbar sind.

Dies geht deutlich über die bisherige bekannte Verfahrensweise, mit im wesentlichen zwei Fahrverhalten bezeichnenden Betriebsweisen, sportlich oder eco, hinaus.

Darüber hinausgehend werden nunmehr für verschiedene Verkehrssituationen, die im alltäglichen Fahrbetrieb immer wiederkehren, charakteristische Längsdynamikprofile eingespeichert. Wiederkehrende Situationen sind dabei beispielsweise
- Normalfahrt Autobahn
- Überholen Autobahn
- Normalfahrt Landstraße
- Überholen Landstraße
- Normalfahrt Stadtverkehr
- Überholen Stadtverkehr
- Stop-and-go

Diese Fahr- bzw. Verkehrssituationen führen zu einem immer wiederkehrenden charakteristischen Längsdynamikprofil. Mit Längsdynamikprofil ist gemeint, daß beispielsweise für den Überholvorgang auf Autobahnen eine bestimmte Sequenz von Sollwerten in ihrer chronologischen Abfolge vorgegeben sind, die ein entsprechend zügig angelegtes Überholen ermöglichen. Solche Sollwertsequenzen werden dann in der entsprechenden Situation abrufbar gestaltet, so daß dieselben regelungstechnisch, die dann während dieser Verkehrsphase folgenden Betriebssollwerte überlagern.

Dies heißt im oben genannten Fall des Beispieles "Überholen auf der Autobahn", daß sobald dieses besagte Längsdynamikprofil abgerufen wird, beispielsweise ein Zurückschalten im Getriebe bewirkt wird, sowie eine entsprechende Betätigung der beschleunigenden Elemente des Antriebsmotors. Beispielsweise Beeinflussung des Luftkraftstoffgemisches, Öffnen von zusätzlicher Motorbeatmung, Einspritzanlage und dergleichen mehr. Ist der besagte Überholvorgang beendet, so ist dann auch die entsprechende Sequenz in ihrer chronologischen Generierung von Sollwertüberlagerungen durchgelaufen und das System kehrt wiederum zum Normalbetrieb zurück.

Wesentlicher Gegenstand der Erfindung ist dabei, daß gegenüber dem Stand der Technik eine Vielfalt von möglichen Fahrsituationen als sozusagen "Überlagerungsprofile" abgespeichert und bei entsprechender Gelegenheit abrufbar sind.

Weitergehende Berücksichtigungen können darin liegen, daß beispielsweise das Umfeld, die Straßensituation oder die Wetterlage mit berücksichtigt und wiederum in dem System verarbeitet wird. Das heißt, bei einem gewünschten Einleiten eines Überholvorganges auf der Autobahn wird die Sequenz der zu überlagernden Sollwerte bei einer trockenen Wetterlage anders sein, als bei der Registrierung von Regen oder Schnee. Mit dem erfindungsgemäßen Verfahren sind solche Berücksichtigungen im einzelnen möglich.

Weitere Ausgestaltungen des erfindungsgemäßen Verfahrens bestehen darin, daß die einzelnen sequenzbezogenen Daten durch Ermittlung des fahrerbezogenen Fahrverhaltens in den sequenzbezogenen Fahrsituationen adaptiv angelegt und auf diese Weise veränderbar sind. Gemeint ist damit, daß das System zunächst derart adaptiv angelegt ist, daß es aus der manuell, seitens des jeweiligen Fahrers durchgeführten Situationsbeherrschung, Daten ermittelt werden, die dem individuellen Fahrer zu eigen sind.

Hierzu kann in weiterer vorteilhafter Ausgestaltung des erfindungsgemäßen Verfahrens eine individuelle Fahrererkennung sensorisch vorgenommen werden, und die entsprechend abgespeicherten Sequenzen könnten dann, wie oben beschrieben, auf jeden Fahrer individuell abgerufen und generiert werden. Das heißt, im einfachsten Fall, daß die Sequenzdaten eines eher ruhigen und defensiven Fahrers andere sind, als die eines sportlichen Fahrers.

Es ist in beiden Fällen selbstredend, daß das ADR-System als solches auch so angelegt ist, daß die sportliche Fahrweise aus sicherheitstechnischen Gründen nicht dahingehend überspitzt werden kann, daß gesetzliche Mindestabstände unterschritten werden. Dies kann die Abstandsregelungseinrichtung ohnehin verhindern. Gemeint ist damit vielmehr, daß individuelle Fahrcharakteristiken, die jeder Person zu eigen sind, in diesem System mit berücksichtigt werden.

In weitergehender erfindungsgemäßer Ausgestaltung ist vorgesehen, daß zur aktuellen Fahrsituationserkennung die aktuellen Ortsdaten aus einem Navigationssystem mitberücksichtigt werden. Dies hat den Vorteil, daß das System dadurch enorm vorausschauend arbeiten kann. Das heißt, die Fahrsituation wird nicht nur taktisch, d. h. also kurzfristig durch die entsprechende Sensorik erkannt, sondern das System weiß durch entsprechende navigationsbezogene Vorausschau im Hinblick auf die aktuelle Ortsbestimmung, ob nachfolgend schwieriges Gelände oder aber starke Kurvenkrümmungen zu erwarten sind, die bei der Einleitung von Überholvorgängen unbedingt beachtet werden müssen.

Die Erfindung ist in der Zeichnung dargestellt und nachfolgend näher beschrieben.

Es zeigt:
Figur 1: Wählbare Längsdynamik.
Figur 2: Adaptive Längsdynamik.

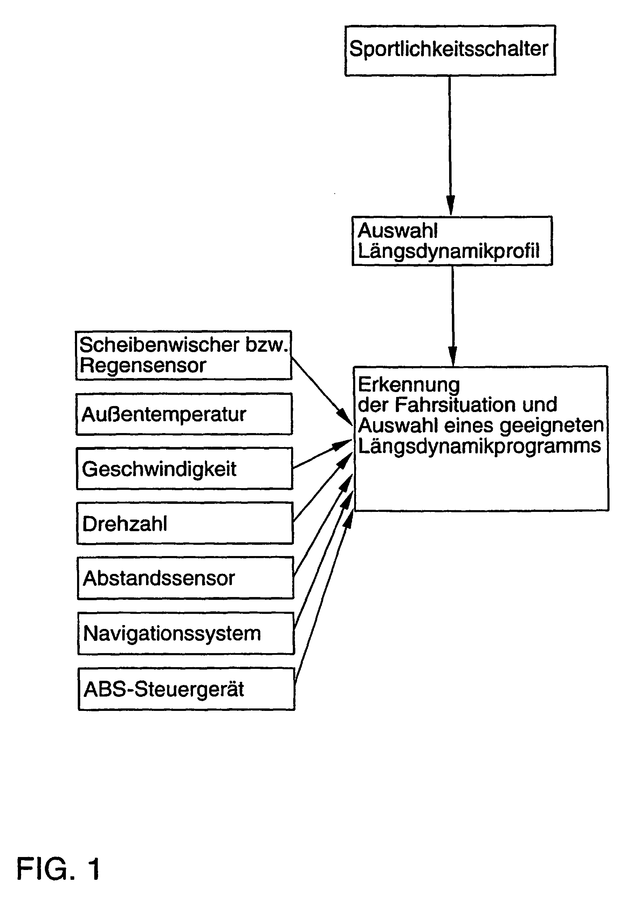

Figur 1 zeigt die einfachste Ausgestaltung des erfindungsgemäßen Verfahrens. Mit Hilfe eines Sportlichkeitsschalters, der aber auch als anders spezifizierter Wahlschalter bezeichnet werden kann, erfolgt eine Auswahl der Längsdynamik bzw. des Längsdynamikprofiles. Hinzugenommen werden weitere sensorische Informationen beispielsweise aus Scheibenwischer oder Regensensor, Außentemperaturfühler, Tachometer bzw. Geschwindigkeitssensor, Drehzahlmesser, Abstandssensor, ggf. Navigationssystem und ggf. ABS-Steuergerät. Diese besagten sensorischen Daten werden dann gemeinsam mit der Auswahl des Längsdynamikprofiles in einer Einheit miteinbezogen bzw. in einem Verfahrensschritt integriert, der das Erkennen der Fahrsituation und die Auswahl eines geeigneten Längsdynamikprogrammes durchführt. Die besagten dynamischen Profile können angelegt sein für die oben bereits ausgeführten Fahrsituationen, wie "Normalfahrt Autobahn", "Überholen Autobahn" mit oder ohne Regen/Schnee, sowie navigationsbezogene Daten.

Damit steht dem Fahrer eine Auswahl mehrerer Längsdynamikprofile zur Verfügung, die jeweils für sich eine Sequenz mehrerer chronologischer Regelgrößen enthalten. Diese Regel- und/oder Stellgrößen werden den Wunschstellgrößen überlagert und bewirken eine entsprechende Assistenz während dieser temporären Fahrsituation.

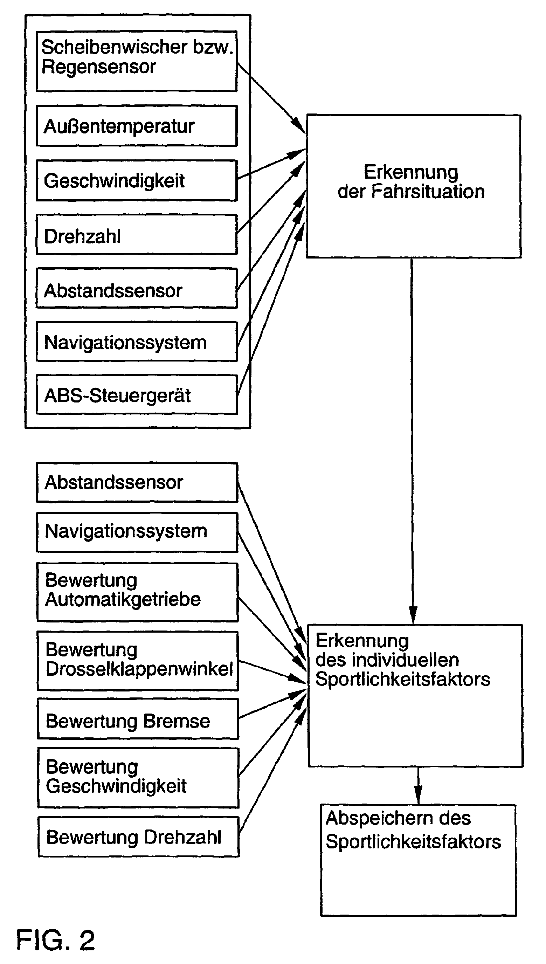

Figur 2 zeigt eine Ausgestaltung, bei der das System adaptiv angelegt ist. Hier steht zunächst das automatische Erkennen der Fahrsituation im Vordergrund. Hierzu assistieren die Sensorwerte eines Regensensors, ggf. der Außentemperatur, Geschwindigkeitssensor, Drehzahlmesser, Abstandssensor, Navigationssystem sowie ABS-Steuergerät. Aus dieser Vielzahl vorhandener Sensoren kann die Fahrsituation zuverlässig und quasi semi-automatisch ermittelt werden. Diese erkannte Fahrsituation wird dabei dem System zur Erkennung des individuellen Fahrverhaltens des jeweiligen Fahrers überlagert. Die Erkennung des individuellen Fahrverhaltens eines Fahrers kann dabei erfolgen aus Abstandssensor, Navigationssystem, Bewertung des Automatikgetriebes, Bewertung der Drosselklappenwinkel des Antriebsaggregates, Bewertung der Bremse, Bewertung der Geschwindigkeit und der Drehzahl. Aus einer entsprechenden Überlagerung der erkannten Fahrsituation und mit der Erkennung des jeweiligen individuellen Fahrverhaltens kann dann ein entsprechendes Profil adaptiv angelegt und fahrerbezogen wieder abgerufen werden.

Die Fahrererkennung als solches erfolgt dabei in zweckmäßiger Weise nicht nur durch eine Identifizierung über die Fahrverhaltensdaten, sondern eine personenbezogene Identifikation beispielsweise durch personenbezogene Schlüssel, optische Erfassung des Fahrergesichtes und dergleichen mehr, realisiert werden. Bei einer solchen Festlegung des individuellen Fahrers kann dann auch eine sichere, jeweils fahrerbezogene adaptive Sequenzspeicherung erfolgen, und das entsprechende, jeweils individuelle Längsdynamikprofil angelegt werden.

Insgesamt berücksichtigt das erfindungsgemäße Verfahren die Fahrsituation als solches, sie assistiert darüber hinaus auch in wiederkehrenden Verkehrssituationen auf optimale Weise und stimmt diese Assistenz auch fahrerindividuell ab.

Insgesamt wird der Fahrbetrieb nicht nur komfortabler, sondern unter dem aufgabengemäß formulierten Sicherheitsaspekt auch noch deutlich sicherer.

## Patentansprüche

1. Verfahren zur Geschwindigkeits- und/oder Abstandsregelung bei Kraftfahrzeugen, bei welchem Geschwindigkeits-, Beschleunigungs- und/oder Verzögerungssollwerten eine wählbare/einstellbare Längsdynamikcharakteristik überlagert wird,
**dadurch gekennzeichnet,**
**daß** aktuelle Fahrsituationen sensorisch erkannt werden, und daß eine Mehrzahl charakteristischer Längsdynamikprofile für verschiedene, wiederkehrende Fahrsituationen bzw. Verkehrssituationen abgespeichert und im fahrsituationsbezogenen Bedarfsfall abrufbar sind.

2. Verfahren nach Anspruch 1,
**dadurch gekennzeichnet,**
**daß** die abgespeicherten und abrufbaren Längsdynamikprofile jeweils eine Sequenz mehrerer chronologischer Regelgrößen enthalten, mit denen temporäre Fahrsituationen im Hinblick auf eine temporäre Überstimmung aktueller Sollwerte beeinflußt werden.

3. Verfahren nach Anspruch 2,
**dadurch gekennzeichnet,**
**daß** die einzelnen sequenzbezogenen Daten durch Ermittlung des fahrerbezogenen Fahrverhaltens in den sequenzbezogenen Fahrsituationen adaptiv angelegt und auf diese Weise veränderbar sind.

4. Verfahren nach einem der vorhergehenden Ansprüche,
**dadurch gekennzeichnet,**
**daß** die sequenzbezogenen Daten für jeden einzelnen Fahrer des besagten Fahrzeuges entsprechend adaptiv ermittelt und abgespeichert werden.

5. Verfahren nach Anspruch 4,
**dadurch gekennzeichnet,**
**daß** eine individuelle Fahrererkennung sensorisch vorgenommen und die entsprechend abgespeicherten Sequenzen generiert werden.

6. Verfahren nach einem der vorhergehenden Ansprüche,
**dadurch gekennzeichnet,**
**daß** in die angegebene Verfahrensweise zusätzlich aktuell ermittelte witterungsbedingte und/oder fahrbahnbezogene Zustandsdaten mitberücksichtigt werden.

7. Verfahren nach einem der vorhergehenden Ansprüche,
**dadurch gekennzeichnet,**
**daß** zur aktuellen Fahrsituationserkennung die aktuellen Ortsdaten aus einem Navigationssystem mitberücksichtigt werden.

## Claims

1. Method for cruise control and/or regulation of vehicle spacing, in which a selectable/adjustable longitudinal dynamic characteristic is superimposed on speed setpoint values, acceleration setpoint values and/or deceleration setpoint values,
**characterized**
**in that** current driving situations are detected by sensor, and in that a plurality of characteristic longitudinal dynamic profiles are stored for different recurring driving situations or traffic situations and can be retrieved in a case in which they are necessary with respect to a driving situation.

2. Method according to Claim 1,
**characterized**
**in that** the stored and retrievable longitudinal dynamic profiles each contain a sequence of a plurality of chronological regulated variables with which temporary driving situations are influenced with respect to temporarily overriding current setpoint values.

3. Method according to Claim 2,
**characterized**
**in that** the individual sequence-related data are created in an adaptive fashion by determining the driver-related behaviour in the sequence-related driving situations and can be changed in this way.

4. Method according to one of the preceding claims,
**characterized**
**in that** the sequence-related data are determined in a corresponding adaptive fashion for each individual driver of said vehicle and stored.

5. Method according to Claim 4,
**characterized**
**in that** an individual driver detection process is performed by sensor and the corresponding stored sequences are generated.

6. Method according to one of the preceding claims,
**characterized**
**in that** weather-related and/or carriageway-related status data which are determined on an up to date fashion are also additionally taken into account in the specified procedure.

7. Method according to one of the preceding claims,
**characterized**
**in that** the current location data from a navigation system are also taken into account for the up to date detection of a driving situation.

## Revendications

1. Procédé de régulation de la vitesse et/ou de l'espacement sur des véhicules automobiles, selon lequel une caractéristique dynamique longitudinale sélectionnable/réglable est superposée à des valeurs de consigne de vitesse, d'accélération et/ou de ralentissement, **caractérisé en ce que** la situation de conduite actuelle est détectée par des capteurs et **en ce qu'**une pluralité de profils dynamiques longitudinaux caractéristiques sont mémorisés pour différentes situations de conduite ou de trafic et peuvent être invoqués en cas de besoin en rapport avec la situation de conduite.

2. Procédé selon la revendication 1, **caractérisé en ce que** les profils dynamiques longitudinaux mémorisés et invocables contiennent respectivement une séquence de plusieurs grandeurs de régulation chronologiques avec lesquelles des situations de conduite temporaires peuvent être influencées en vue d'une concordance temporaire avec des valeurs de consigne actuelles.

3. Procédé selon la revendication 2, **caractérisé en ce que** les données individuelles en rapport avec la séquence sont créées de manière adaptative par détermination du comportement de conduite en rapport avec le conducteur dans les situations de conduite en rapport avec la séquence et sont ainsi modifiables.

4. Procédé selon l'une des revendications précédentes, **caractérisé en ce que** les données en rapport avec la séquence sont déterminées en conséquence de manière adaptative et mémorisées pour chaque conducteur individuel dudit véhicule.

5. Procédé selon la revendication 4, **caractérisé en ce qu'**une détection du conducteur individuelle est effectuée par des capteurs et les séquences mémorisées correspondantes sont générées.

6. Procédé selon l'une des revendications précédentes, **caractérisé en ce que** des données d'état actuelles liées aux conditions météorologiques et/ou en rapport avec la chaussée sont également prises en compte dans le mode opératoire indiqué.

7. Procédé selon l'une des revendications précédentes, **caractérisé en ce que** les données de localisation actuelles provenant d'un système de navigation sont également prises en compte pour la détection de la situation de conduite actuelle.
